# EUROPEAN PATENT SPECIFICATION

(11) **EP 1 843 525 B1**
(45) Date of publication and mention of the grant of the patent: **02.10.2013**
(21) Application number: 07105506.5
(22) Date of filing: 02.04.2007
(51) Int. Cl.: H04L 12/28

(54) **Apparatus, method and system for managing event information**
Vorrichtung, Verfahren und System zur Verwaltung von Ereignisinformationen
Appareil, procédé et système pour gérer des informations d'événements

(30) Priority: 06.04.2006 KR 20060031651
(43) Date of publication of application: 10.10.2007
(73) Proprietor: Samsung Electronics Co., Ltd., Suwon-si, Gyeonggi-do, 443-742 (KR)
(72) Inventor: Jin, Ho, Gyeonggi-do (KR); Sohn, Young-Chul, Seoul (KR)
(74) Representative: Clark, David James

(56) References cited:
- WO-A-2005/125102
- WO-A-2006/035302
- US-A1- 2002 083 143
- US-A1- 2003 217 136
- US-A1- 2004 128 310
- "SIMPLE UPNP PROXY PROTOCOL(SUPP) ARCHITECTURE version 0.91" INTERNET CITATION, [Online] 4 February 2002 (2002-02-04), XP002227050 Retrieved from the Internet: URL:http://www.altotec.de/SUPP/SUPPA10_200 20204.htm> [retrieved on 2003-01-13]

## Description

Methods, apparatuses and systems consistent with the present invention relate to managing event information and, more particularly, to collecting event information generated in devices included in a network, such as a home network in which a domain is created, and providing the event information to users.

Recently, with the development of communication and network technologies, various types of home networks have appeared, and a technology for increasing user convenience in controlling and monitoring several devices included in a home network has been proposed.

In particular, a technology of collecting and providing event information generated in each device (for example, indicating the state of each device, such as starting the recording of a program received by a set-top box at a certain time set by a user or ending the operation of a washing machine) to the user has been proposed such that the user can easily recognize the state of each device.

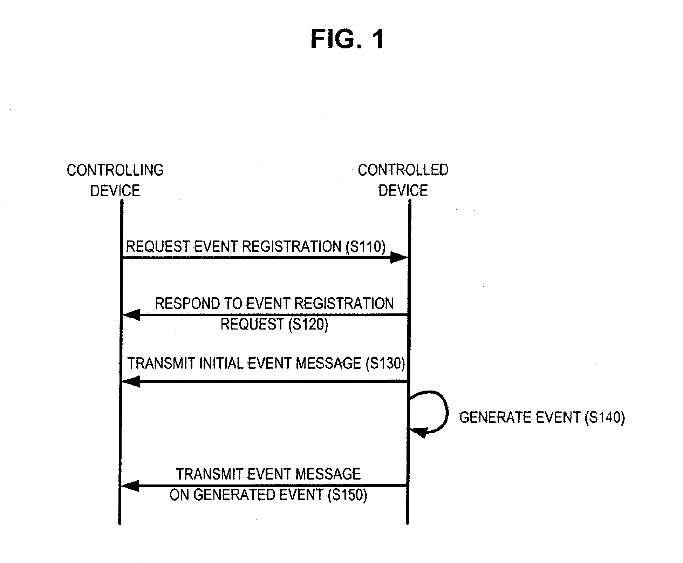

One representative example of such technology is a home network based on Universal Plug and Play (UPnP) technology. Event information generated in each device included in the home network is provided to a user through the procedure illustrated in FIG. 1.

FIG. 1 is a schematic flowchart of the procedure for providing event information using related art UPnP technology.

At this time, the controlling device in FIG. 1 changes the state of other devices included in the home network according to user input, or receives information on the change of state generated by other devices. A controlled device is controlled by the controlling device, and provides information on the generated event to the controlling device through a predetermined procedure. Here, the controlling device and the controlled device are in the same home network.

Referring to FIG. 1, the controlling device requests the controlled device to perform event registration in order to receive an event generated in the controlled device (S110). The event registration request may be performed in response to an input from a user who uses the controlling device, or may be automatically performed when the controlling device starts operating.

The controlled device responds to the event registration request (120). The controlled device transmits an initial event message including information on its current state to the controlling device (S 130).

After operation S130, when an event indicating the state change of the controlled device is generated (S 140), the controlled device transmits an event message including information on the generated event to the controlling device (S150). At this time, when a plurality of events are generated at the same time, the controlled device may embed information on all of the events into a single event message, and transmit the single event message to the controlling device.

Therefore, the controlling device interprets the transmitted event message and provides the information on the event generated in the controlled device to a user.

However, in such a case above, the controlling device requests the controlled device to perform the event registration in order to obtain information on an event generated in the controlled device. Accordingly, the problem may occur that event information generated in the controlled device cannot be acquired by the device incapable of issuing an event registration request. If the controlling device and the controlled device are not in the same home network, the controlling device cannot receive the event information generated in the controlled device despite having an event registration request function.

Also, even if the controlling device performs the event registration request based on the UPnP technology, the event information generated in the controlled device cannot be received if the power of the controlling device is off. For example, assume the situation when a user instructs a personal video recorder (PVR) to perform reservation recording by using a personal data assistant (PDA) and then turns off the power of a PDA. In this case, if the PVR fails to perform the reservation recording and is to transmit the event of fail, the PDA cannot receive the event information because the power is off. US 2004/0128310 describes methods and devices for networked applications are disclosed. A device instructs a proxy server to receive traffic inbound for the device, and to notify the device when such traffic arrives. The device can then sleep, except for a notification channel that listens for a wakeup message from the proxy server. The proxy server detects traffic inbound for proxied devices, caches the data from that traffic, and issues notification messages to the proxied devices to cause those devices to download the cached data. One use for such a system is in instant messaging, as it allows a subscriber to place a battery-powered computing device in sleep mode while still advertising a continuous presence to her messaging buddies.

It is an aim of preferred embodiments of the present invention to address at least one disadvantage of the prior art, whether identified herein, or otherwise.. According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a flowchart illustrating a procedure of acquiring event information using related art technology;
FIG. 2 is a block diagram illustrating a system for providing event information according to an exemplary embodiment of the present invention;
FIG. 3 is a block diagram illustrating a configuration of an apparatus for managing event information which manages event information according to an exemplary embodiment of the present invention;
FIG. 4 is a flowchart illustrating a method for managing event information according to an exemplary embodiment of the present invention;
FIG. 5 is a flowchart illustrating a method for managing event information according to another exemplary embodiment of the present invention; and
FIG. 6 illustrates an event log information table according to an exemplary embodiment of the present invention.

Advantages and features of the aspects of the present invention and methods of accomplishing the same may be understood more readily by reference to the following detailed description of exemplary embodiments and the accompanying drawings.

The present invention is described hereinafter with reference to flowchart illustrations of user interfaces, methods, and computer program products according to exemplary embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded into a computer or other programmable data processing apparatus to cause a series of operational steps to be performed in the computer or other programmable apparatus to produce a computer implemented process such that the instructions that execute on the computer or other programmable apparatus provide steps for implementing the functions specified in the flowchart block or blocks.

In addition, each block of the flowchart illustrations may represent a module, segment, or portion of code, which comprises one or more executable instructions for implementing the specified logical function(s). It should also be noted that in some alternative implementations, the functions noted in the blocks may occur out of order. For example, two blocks shown in succession may in fact be executed substantially concurrently or the blocks may sometimes be executed in the reverse order, depending upon the functionality involved.

The term "event" used in the present specification, indicates several changes of a state generated in a device included in a home network (for example, starting or terminating the recording of a program in a set-top box, or stopping a DVD). Various events may be generated depending on the types of devices. In addition, the term "event" used in the present specification may indicate an update of information provided from the device connected to home network through the Internet even though it is not included in home network.

The term "event information" indicates information on an event such as identification information on a device that generates the event, the time at which the event is started, and the content of the event.

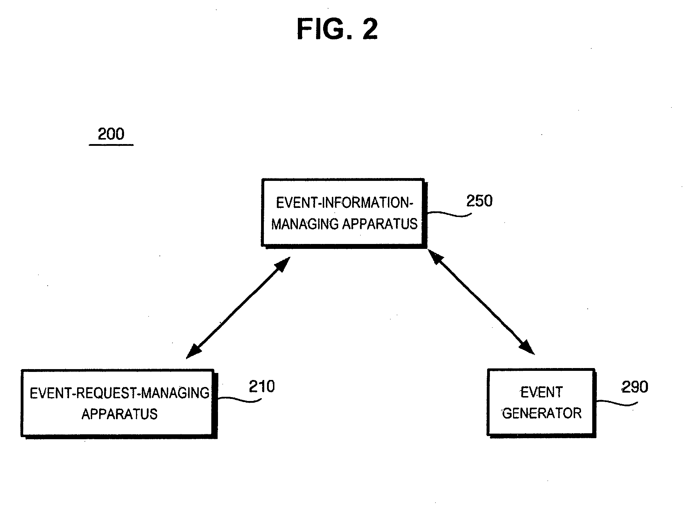

FIG. 2 is a block diagram showing a system for providing event information according to an exemplary embodiment of the present invention. A system for managing event information 200 includes an event-management-requesting device 210, an event-information-managing device 250, and an event generator 290.

The event-management-requesting device 210 and the event-information-managing device 250 are separated in FIG. 2, but in an alternative embodiment they are integrated into a single device.

In the embodiment shown in Figure 2 the event-management-requesting device 210, the event-information-managing device 250, and the event generator 290 are included in a single home network. However, in other embodiments but they are not limited to this arrangement.

That is, in other embodiments the event-information-managing device 250 and the event generator 290 only are included in a single home network. In such embodiments, the event-management-requesting device 210 may suitably be a portable mobile device accessible to the event-information-managing device 250, or a terminal remotely accessible to the event-information-managing device 250. In addition, in such embodiments, the event-information-managing device 250 operates as a gateway in the home network.

The event-information-managing device 250 and the event generator 290 may reside in different networks. For example, the event-information-managing device 250 and the event-management-requesting device 210 can reside in a single home network, and the event generator 290 can be connected to the event-information-managing device 250 through the Internet. In this case, location information of the event generator 290, for example universal resource locator (URL) information, is stored in the event-information-managing device 250, and the event-information-managing device 250 can access the event generator 290 using the stored URL through the Internet. As another exemplary embodiment of the present invention, the event generator 290 can be connected to the event-information-managing device 250 through the Internet by accessing the URL of the event-information-managing device 250 which has been defined above.

The event-management-requesting device 210 includes the devices which do not use UPnP technology, as well as controlling devices in the home network based on the UPnP technology as explained with reference to FIG. 1.

The event-management-requesting device 210 collects the information on an event generated in the event generator 290 with respect to the event-information-managing device 250 according to a user input, or when the event-management-requesting device 210 starts operating, and then requests to provide the collected information.

The event-information-managing device 250 collects the event information generated in the event generator 290, and provides the collected event information to the event-management-requesting device 210 according to the request of the event-management-requesting device 210.

The event-information-managing device 250 controls the event generator 290, and provide the event information according to the event generator 290 to the event-management-requesting device 210.

The event generator 290 is controlled by the event-information-managing device 250, and the information on the event generated in the event generator 290 is transmitted to the event-information-managing device 250 according to the control. At this time, the event information may be transmitted in a multicast manner. When the event generator 290 is connected to the event-information-managing device 250 through the Internet and information is updated in the event generator 290, for example, if the event generator 290 provides updates of information on stock or weather the updated information can be provided to the event-information-managing device 250 as the event information. Here, for example the information on stock or weather is updated every day or every week, with the updated refresh period pre-set by the event generator 290.

The operation of the system 200 illustrated in FIG. 2 will be described in detail below.

The event-management-requesting device 210 requests the event-information-managing device 250 to manage the information on the event generated in the event generator 290. At this time, the event-management-requesting device 210 can perform UPnP communication with the event-information-managing device 250, or communicate using a pre-set protocol.

When an event is generated in the event generator 290, an event message including event information on the generated event is transmitted to the event-information-managing device 250. At this time, the event message can be transmitted in a multicast manner.

The event-information-managing device 250 extracts the event information from the transmitted event message and transmits it to the event-management-requesting device 210, or it may store the extracted event information so that it can be provided according to the request of the event-management-requesting device 210.

The event-management-requesting device 210 displays the event information received from the event-information-managing device 250, or provides the event information to a user by outputting it as sound.

If the event generator 290 is connected to the event-information-managing device 250 through the Internet, the event generator 290 can transmit the information updated according to the request of the event-information-managing device 250 as event information to the event-information-managing device 250.

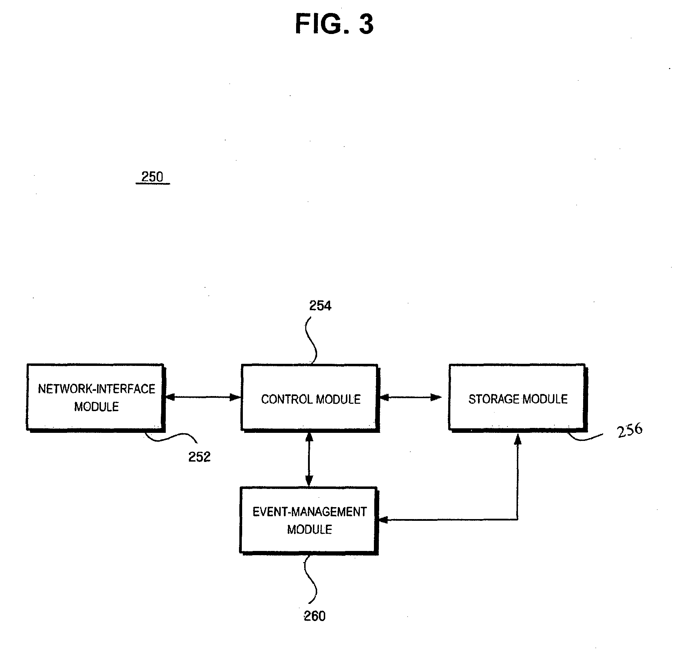

FIG. 3 is a block diagram illustrating a configuration of an apparatus for managing event information according to an exemplary embodiment of the present invention.

Referring to FIG. 3, the event-information-managing device 250 includes a network interface module 252, a control module 254, a storage module 256, and an event management module 260.

The network interface module 252 performs the communication with the event-management-requesting device 210 or with the event generator 290 via a wire or wireless connection.

With respect to event information management, the control module 254 interprets the message received via the network interface module 252, or generates a message to be transmitted to the event-management-requesting device 210 or event generator 290 to transmit the message via the network interface module 252.

The event management module 260 interprets the event message received from the event generator 290, stores the event information on the generated event into the storage module 256, and manages the stored event information. Then, the event management module 260 extracts the event information stored in the storage module 256 and provides the event information to the control module 254 according to the request of the event-management-requesting device 210, and the control module 254 generates message for providing event log information based on the extracted information and transmits the message to the event-management-requesting device 210 through the interface module 252.

The control module 254 and the event management module 260 can operate as a single module.

The storage module 256 stores the event information on the event generated in the event generator 290.

The term "module", as used herein, means, but is not limited to, a software or hardware component, such as a Field Programmable Gate Array (FPGA) or an Application Specific Integrated Circuit (ASIC), which performs certain tasks. A module may advantageously be configured to reside on the addressable storage medium and to execute on one or more processors. Thus, a "unit" may include, by way of example, components, such as software components, object-oriented software components, class components and task components, process, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

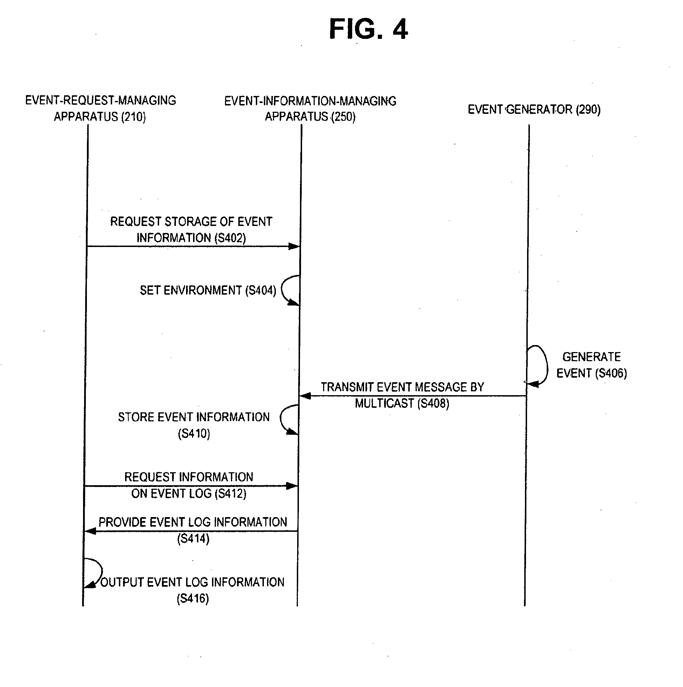

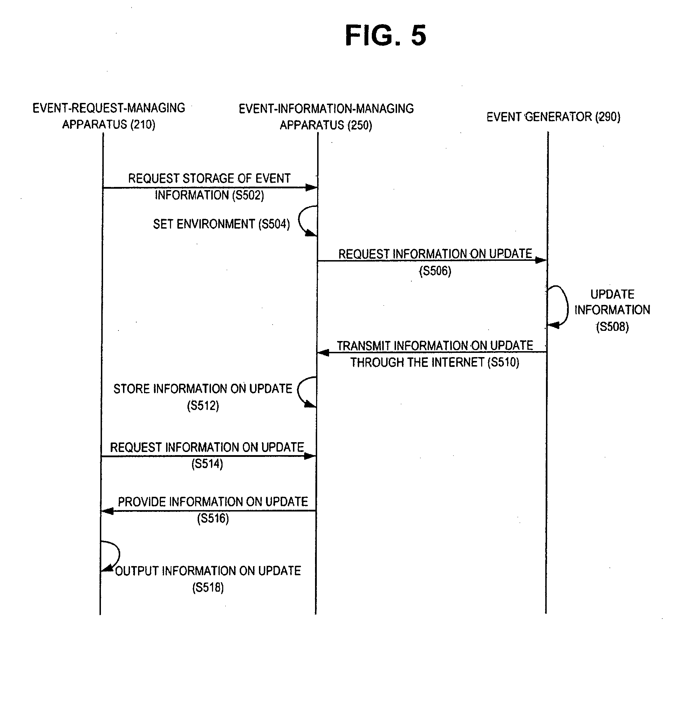

The operation of each module illustrated in FIG. 3 will be described in detail according to the flowchart illustrated in FIGS. 4 and 5. FIG. 4 illustrates the operation performed when the event generator 290 is included in the network, which also includes the event-information-managing device 250. FIG. 5 illustrates the operation performed when the event generator 290 is connected to the event-information-managing device 250 through the Internet.

Referring to FIG. 4, the event-management-requesting device 210 requests the event-information-managing device 250 to store the event information generated in the event generator 290 (S402).

Meanwhile, the user may set the event-information-managing device 250 to automatically manage the event generated in every device existing on the network. In this case, the event-information-managing device 250 can manage the event without the request to store the event information performed from the event-management-requesting device 210.

According to the request, the control module 254 of the event-information-managing device 250 sets the environment for storing the event information (S404). For example, the control module 254 can establish the environment where the corresponding information can be stored in the storage module 256 according to the time at which the event is started, the event generator from which the event is generated, or the type of the event.

When a user requests the event-management-requesting device 210 to store the event information, the information on setting the environment is provided so that the environment where the event information is stored is established in a format desired by a user. After the environment is established, if the event, such as, the state change of the device in the event generator 290 (for example, ending the operation of a DVD player, or generating errors) is generated (S406), the event generator 290 transmits the event message including the event information on the generated event to the event-information-managing device 250 in a multicast manner (S408).

At this time, the event information may include a parameter indicating the state change of the event generator and the parameter value, and the information may be transmitted in a frame format or a structured text format, like the extensible markup language (XML).

The event message transmitted from the event generator 290 may include a multicast Internet Protocol (IP) address and port information for the transmission in multicast, information on an event type, and identification information on the event message for preventing repeated message reception as a result of the multicast transmission and identification information on the device generated by event.

At this time, info, fault, warning, and emergency are examples of event types. The control module 254 of the event-information-managing device 250 transmits the event message received through the network interface module 252 to the event management module 260. The event management module 260 interprets the event message and stores the event information in the storage module 256 according to the environment set during operation S404 (S410).

Whenever the event is generated in the event generator 290, the corresponding event information is transmitted to the event-information-managing device 250 in a multicast manner. Therefore, log information on the event information is left in the storage module 256. The event-information-managing device 250 stores the event information generated for a predetermined period of time, or selectively stores the received event information. Accordingly, the corresponding environment can be established in operation S404.

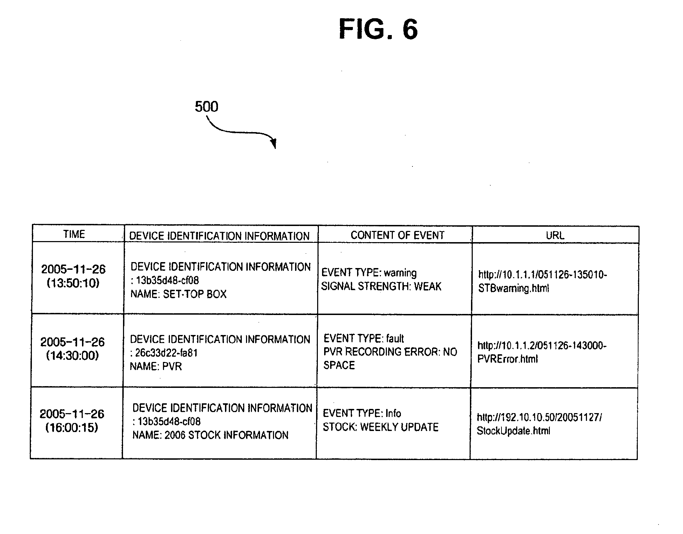

FIG. 6 illustrates an example indicating log information stored in the storage module 256.

Referring to FIG. 6, the time at which the event is started, the type of the event generator, the type of the event, and the URL information of the event generator in which the event generated are recorded in a log information table 500.

Log information stored in the log information table 500 may be stored, searched, or filtered by the control module 254 or the event management module 260, and the result of storing, searching, and filtering provided to a user through the event-management-requesting device 210.

After the event information is stored in the storage module 256, the event-management-requesting device 210 requests the event-information-managing device 250 for the log information (S412). In the response, the event management module 260 extracts the event log information from the storage module 256 and provides it to the event-management-requesting device 210 (S414).

The event-management-requesting device 210 can sort event log information by event generators, event types, or event generation times when providing it to the user and can also allow the user to search events.

The event log information can be transmitted to the event-management-requesting device 210 at once or in a regular term without the request from the event-management-requesting device 210 whenever new event information with respect to the event generation is stored in the event-information-managing device 250.

Whenever an event is generated by the event generator 290, the information on the generated event is transmitted to the event-information-managing device 250 in a multicast manner, thereby allowing the user to access the event-information-managing device 250 whenever the user wants to receive event log information by using the event-management-requesting device 210. Referring to FIG. 5, the event-management-requesting device 210 requests the event-information-managing device 250 to store the event information generated in the event generator 290 (S502).

According to the request, the control module 254 of the event-information-managing device 250 establishes an environment for storing event information (S504). In this case, the environment is established according to the method described in operation S404 of FIG. 4.

The event-information-managing device 250 stores location information, e.g., URL information, of the event generator 290 in the storage module 256. Accordingly, after accessing the event generator 290 through the Internet by using the location information, the event-information-managing device 250 requests information on the update performed in the event generator 290 (S506). As another exemplary embodiment, the event generator 290 and the event-information-managing device 250 can be connected to each other through the Internet by accessing the URL of the event-information-managing device 250, which is already defined.

When the information is updated in the event generator 290 (S508), the updated information is transmitted to the event-information-managing device 250 through the Internet (S510). In this case, the transmitted information on the update corresponds to event information included in the event message described in FIG. 4.

The control module 254 of the event-information-managing device 250 transmits the event message received through the network interface module 252 to the event management module 260, and the event management module 260 interprets the event message and stores the event information in the storage module 256 according to the environment set in operation S504 (S512). Whenever an event generates in the event generator 290, the corresponding event information may be transmitted to the event-information-managing device 250. Therefore, the log information with respect to the event information is left in the storage module 256.

After the event information is stored in the storage module 256 and when the event-management-requesting device 210 requests the event-information-managing device 250 for the log information (S514), the event management module 260 extracts the event log information from the storage module 256 and provides it to the event-management-requesting device 210.

The event-management-requesting device 210 provides the log information received from the event-information-managing device 250 to the user by displaying the log information or by outputting a sound signal (S518).

The event-management-requesting device 210 sorts event log information by event generators, event types, or event generation times when providing it to the user and allows the user to search event information.

The home network is used as an example to describe the present invention, but this is just exemplary. It should be apparent from the description herein that the present invention can be applied to the network physically and logically distinguished.

According to the exemplary embodiments, when the UPnP event registration request cannot be performed, or the event is performed through a device not included in the network, the event information generated by the event generator can be received.

According to the exemplary embodiments, event information generated in a device such as a controlled device is collected and provided by an event-information-managing apparatus, thereby allowing the event information to be managed and shared efficiently.

Although a few preferred embodiments have been shown and described, it will be appreciated by those skilled in the art that various changes and modifications might be made without departing from the scope of the invention, as defined in the appended claims.

## Claims

1. An apparatus for managing event information, the apparatus comprising:
an event-management-requesting device (210) arranged such that when it starts operating it requests storage of event information by a storage module (256)
an event management module (260) arranged to receive event information on an event generated in an event generator (290), located on a same network as the event management module (260), in a multicast manner and to manage the received event information, including storing the received event information on the storage module (256); and
**characterised in that**: the event management module (260) is arranged to subsequently provide the received event information to the event-management-requesting device (210) in response to a request for the event information.

2. The apparatus of claim 1, wherein the event management module (260) is connected to the event generator (290) through the Internet.

3. The apparatus of claim 1 or 2, wherein the event-management-requesting device (210) is arranged to provide the event information to a user.

4. The apparatus of claim 1, 2 or 3 wherein the event information comprises information on a time the event was generated.

5. The apparatus of claim 1, 2, 3 or 4 wherein the event information comprises information on the content of the generated event.

6. The apparatus of any one of claims 1-5, wherein the event information comprises identification information on a generator (290) that generated the event.

7. The apparatus of any one of claims 1-6, wherein the event management module is arranged to transmit to the event generator (290) event log information comprising a plurality of event information stored in the storage module (256).

8. The apparatus of any one of claims 1-7, wherein the event information is provided in an event message generated by the event generator (290) and transmitted, and the event message comprises a multicast Internet protocol (IP) address and port information for the multicast transmission and identification information on the event message.

9. The apparatus of claim 1, 2 or 3, wherein the event information comprises information on an update provided by the event generator (290).

10. The apparatus of claim 1, 2, 3 or 9, wherein the event information comprises location information of the event generator.

11. The apparatus of claim 1, 2, 3, 9 or 10, wherein the location information comprises uniform resource locator (URL) information.

12. The apparatus for managing event information of claim 1, 2, 3, 9, 10 or 11, wherein the event management module (260) is arranged to transmit event log information comprising a plurality of event information stored in the storage module (256) to the event-management-requesting device (210).

13. A method of managing event information, the method comprising:
requesting, by an event-management-requesting device (210), storage of event information on starting of the event-management-requesting device (210);
receiving at an event management module (260) event information on an event generated in an event generator (290) in a multicast manner, wherein the event management module (260) and the event generator (290) are located on a same network;
storing the received event information; and **characterised by** subsequent providing of the received event information to the event-management-requesting device (210) in response to a request for the event information.

14. The method of claim 13, wherein the event management module (260) is connected to the event generator (290) through the Internet.

15. The method of claim 14 or 15, wherein the event-management-requesting device provides the event information to a user.

16. The method of claim 13, 14, or 15, wherein the event information comprises information on a time the event was generated.

17. The method of claim 13, 14, 15, or 16, wherein the event information comprises information on the content of the generated event.

18. The method of claim 13, 14, 15, 16 or 17 wherein the event information comprises identification information on a generator generating the event.

19. The method of claim 13, 14, 15, 16, 17 or 18 further comprising transmitting event log information comprising the stored event information to the event-management-requesting device (210).

20. The method of claim 13, 14, 15, 16, 17, 18 or 19, wherein the event information is provided in an event message generated by the event generator (290) and transmitted, wherein the event message comprises a multicast internet protocol (IP) address and port information for the transmission of multicast and identification information on the event message.

21. The method of claim 13 or 14, wherein the event information comprises update information provided by the event generator.

22. The method of claim 13, 14 or 21, wherein the event information comprises location information of the event generator.

23. The method of claim 13, 14, 21 or 22, wherein the location information comprises URL information.

24. The method of claim 13, 14, 21, 22 or 23, further comprising transmitting event log information comprising the stored event information to the event-management-requesting device (210).

25. A system comprising:
an event generator (290);
an event-information-managing apparatus (250) which is arranged to receive event information on an event generated by the event generator (290); and
an event-management-requesting device (210) which is arranged on starting thereof to request storing of the event information in a storage module (256) of the event-information-managing apparatus (250), and **characterised by** being arranged to subsequently receive the event information from the event-information-managing apparatus (250) in response to a request for the event information, and to provide the event information to a user.

26. The system of claim 25, wherein the event-information-managing apparatus (250) is arranged to store the received event information.

27. The system of claim 25 or 26, wherein the event-information-managing apparatus (250) is arranged to transmit event log information comprising the stored event information to the event-management-requesting device (210) according to a request from the event-management-requesting device (210).

28. The system of claim 25, 26 or 27, wherein the event generator (290) is connected to the event-information-managing apparatus (250) through the Internet and the event information comprises information on an update.

29. The system of any of claims 25-28, wherein the event information comprises information on a time the event was generated.

30. The system of any one of claims 25-29, wherein the event information comprises information on the content of the event generated.

31. The system of any one of claims 25-30, wherein the event information comprises identification information of the event generator.

## Patentansprüche

1. Eine Vorrichtung zum Verwalten von Ereignisinformationen, wobei die Vorrichtung das Folgende umfasst:
Eine Ereignisanforderungs-Verwaltung (210), die bei Arbeitsbeginn die Abspeicherung der Ereignisinformation in einem Speichermodul (256) verlangt.
Ein Ereignisverwaltungsmodul (260), das die von einem im gleichen Netzwerk wie das Ereignisverwaltungsmodul (260) befindlichen Ereignisgenerator (290) erzeugte und als Multicast übertragene Ereignisinformation empfängt und die empfangene Ereignisinformation,
einschließlich der Abspeicherung der empfangenen Ereignisinformation, im Speichermodul (256) verwaltet; und
**dadurch gekennzeichnet ist, dass** das Ereignisverwaltungsmodul (260) anschließend die erhaltene Ereignisinformation als Antwort auf eine Ereignisinformationsanfrage an die Ereignisanforderungs-Verwaltung (210) liefert.

2. Vorrichtung nach Anspruch 1, wobei das Ereignisverwaltungsmodul (260) über Internet mit dem Ereignisgenerator (290) verbunden ist.

3. Vorrichtung nach Anspruch 1 oder 2, wobei die Ereignisinformation von der Ereignisanforderungs--Verwaltung (210) an einen Benutzer geliefert wird.

4. Vorrichtung nach Anspruch 1, 2 oder 3, wobei die Ereignisinformation die über den Zeitpunkt der Ereigniserzeugung vorliegenden Informationen enthält.

5. Vorrichtung nach Anspruch 1, 2, 3 oder 4, wobei die Ereignisinformation Informationen über den Inhalt des erzeugten Ereignisses enthält.

6. Vorrichtung nach einem der Ansprüche 1-5, wobei die Ereignisinformation die Identifikationsinformation des Ereignisgenerators (290) enthält, der das Ereignis erzeugt hat.

7. Vorrichtung nach einem der Ansprüche 1-6, wobei das Ereignisverwaltungsmodul so angeordnet ist, dass es dem Ereignisgenerator (290) Ereignisprotokollinformationen mit einer Vielzahl von im Speichermodul (256) gespeicherten Ereignisinformationen überträgt.

8. Vorrichtung nach einem der Ansprüche 1-7, wobei die Ereignisinformation in einer vom Ereignisgenerator (290) erzeugten Ereignismeldung übertragen wird und die Ereignismeldung eine Internet-Multicast-Protokoll (IP)-Adresse und Schnittstelleninformationen für die Multicast-Übertragung und Identifikationsinformationen zur Ereignismeldung enthält.

9. Vorrichtung nach Anspruch 1, 2 oder 3, wobei die Ereignisinformation Informationen über die vom Ereignisgenerator (290) gelieferte Aktualisierung enthält.

10. Vorrichtung nach Anspruch 1, 2, 3 oder 9, wobei die Ereignisinformation Angaben über den Ort des Ereignisgenerators enthält.

11. Vorrichtung nach Anspruch 1, 2, 3, 9 oder 10, wobei die Ortsinformation Informationen über URL-Adressen enthält.

12. Vorrichtung zur Verwaltung von Ereignisinformationen nach Anspruch 1, 2, 3, 9, 10 oder 11, wobei das Ereignisverwaltungsmodul (260) so angeordnet ist, dass es Ereignisprotokollinformationen mit einer Vielzahl von im Speichermodul (256) gespeicherten Ereignisinformationen an die Ereignisanforderungs-Verwaltung (210)überträgt.

13. Ein Ereignisverwaltungsverfahren, das Folgendes umfasst:
Anforderung durch eine Ereignisanforderungs-Verwaltung (210),
Speicherung von Ereignisinformationen bei Inbetriebnahme der Ereignisanforderungs-Verwaltung (210);
Multicast-Empfang der von einem Ereignisgenerator (290) erzeugten Ereignisinformation in einem Ereignisverwaltungsmodul (260), wobei sich das Ereignisverwaltungsmodul (260) und der Ereignisgenerator (290) im gleichen Netzwerk befinden;
Abspeicherung der empfangenen Ereignisinformation; und
**gekennzeichnet durch** anschließendes Bereitstellen der empfangenen Ereignisinformation in einer Ereignisanforderungs-Verwaltung (210) als Antwort auf eine Ereignisinformationsanforderung.

14. Verfahren nach Anspruch 13, wobei das Ereignisverwaltungsmodul (260) über Internet mit dem Ereignisgenerator (290) verbunden ist.

15. Verfahren nach Anspruch 14 oder 15, wobei das Gerät zur Ereignisanforderungs-Verwaltung die Ereignisinformation an einen Benutzer liefert.

16. Verfahren nach den Ansprüchen 13, 14 oder 15, wobei die Ereignisinformation die über den Zeitpunkt der Ereigniserzeugung vorliegenden Informationen enthält.

17. Verfahren nach den Ansprüchen 13, 14, 15 oder 16, wobei die Ereignisinformation Informationen über den Inhalt des erzeugten Ereignisses enthält.

18. Verfahren nach den Ansprüchen 13, 14, 15, 16 oder 17, wobei die Ereignisinformation Identifikationsinformationen des Ereignisgenerators enthält, der das Ereignis erzeugt hat.

19. Verfahren nach den Ansprüchen 13, 14, 15, 16, 17 oder 18, das ferner die Übertragung von Ereignisprotokollinformationen mit den gespeicherten Ereignisinformationen an das Ereignisanforderungs-Verwaltungsgerät (210) umfasst.

20. Verfahren nach den Ansprüchen 13, 14, 15, 16, 17, 18 oder 19, mit dem die Ereignisinformation in einer vom Ereignisgenerator (290) erzeugten Ereignismeldung übertragen wird und die Ereignismeldung eine Internet-Multicast-Protokoll (IP)-Adresse und Schnittstelleninformationen für die Übertragung von Multicast-und Identifikationsinformationen über die Ereignismeldung enthält.

21. Verfahren nach den Ansprüchen 13 oder 14, wobei die Ereignisinformation Informationen über die vom Ereignisgenerator gelieferte Aktualisierung enthält.

22. Verfahren nach den Ansprüchen 13, 14 oder 21, wobei die Ereignisinformation Angaben über den Ort des Ereignisgenerators enthält.

23. Verfahren nach den Ansprüchen 13, 14, 21 oder 22, wobei die Ortsinformation Informationen über URL-Adressen enthält.

24. Verfahren nach den Ansprüchen 13, 14, 21, 22 oder 23, das ferner die Übertragung von Ereignisprotokollinformationen mit den gespeicherten Ereignisinformationen an die Ereignisanforderungs-Verwaltung (210) umfasst.

25. Ein System bestehend aus:
einem Ereignisgenerator (290);
einem Ereignisinformationen-Verwaltungsgerät (250), das die Ereignisinformation über ein vom Ereignisgenerator (290) erzeugtes Ereignis empfängt; und
einem Ereignisanforderungs-Verwaltungsgerät (210), das bei seiner
Inbetriebnahme die Abspeicherung der Ereignisinformation in einem Speichermodul (256) des Ereignisinformationen-Verwaltungsgeräts (250) verlangt und **dadurch gekennzeichnet ist, dass** es anschließend die Ereignisinformation vom Ereignisinformationen-Verwaltungsgerät (250) als Antwort auf eine Ereignisinformationsanforderung empfängt und die Ereignisinformation an einen Benutzer liefert.

26. System nach Anspruch 25, wobei das Ereignisinformationen-Verwaltungsgerät (250) so angeordnet ist, dass es empfangene Ereignisinformationen speichert.

27. System nach den Ansprüchen 25 oder 26, wobei das Ereignisinformationen-Verwaltungsgerät (250) so angeordnet ist, dass es Ereignisprotokollinformationen mit den gespeicherten Ereignisinformationen auf Anforderung der Ereignisanforderungs-Verwaltung (210) an die Ereignisanforderungs-Verwaltung (210) überträgt.

28. System nach den Ansprüchen 25, 26 oder 27, wobei der Ereignisgenerator (290) mit dem Ereignisinformationen-Verwaltungsgerät (250) über das Internet verbunden ist und die Ereignisinformation Aktualisierungsinformationen enthält.

29. System nach einem der Ansprüche 25-28, in dem die Ereignisinformation Informationen über die Zeit enthält, zu der das Ereignis erzeugt wurde.

30. System nach allen Ansprüchen 25-29, in dem die Ereignisinformation Informationen über den Inhalt des erzeugten Ereignisses enthält.

31. System nach allen Ansprüchen 25-30, in dem die Ereignisinformation Identifikationsinformationen des Ereignisgenerators enthält.

## Revendications

1. Appareil destiné à la gestion d'informations événementielles, l'appareil comprenant :
un système de demande de gestion d'événements (210) agencé de manière à ce que lorsqu'il démarre, il demande le stockage d'informations événementielles par un module de stockage (256)
un module de gestion d'événements (260) agencé de manière à recevoir des informations événementielles sur un événement généré dans un générateur d'événements (290), situé sur un même réseau que le module de gestion d'événements (260), en multi-diffusion, et à gérer les informations événementielles reçues, y compris le stockage d'informations événementielles reçues sur le module de stockage (256) ; et
**caractérisé en ce que** : le module de gestion d'événements (260) est agencé de manière à fournir par la suite les informations événementielles reçues au dispositf de demande de gestion (210) en réponse à une demande d'informations événementielles.

2. Appareil de la revendication 1, où le module de gestion d'événements (260) est connecté au générateur d'événements (290) par Internet.

3. Appareil de la revendication 1 ou 2, où le dispositif de demande de gestion d'événements (210) est agencé de manière à fournir des informations événementielles à un utilisateur.

4. Appareil de la revendication 1, 2 ou 3, où les informations événementielles comprennent des informations sur l'heure de génération de l'événement.

5. Appareil de la revendication 1, 2, 3 ou 4, où les informations événementielles comprennent des informations sur le contenu de l'événement généré.

6. Appareil de l'une quelconque des revendications 1-5, où les informations événementielles comprennent des informations d'identification sur un générateur (290) qui a généré l'événement.

7. Appareil de l'une quelconque des revendications 1-6, où le module de gestion d'événements est agencé de manière à transmettre au générateur d'événements (290) des informations du journal des événements comprenant une pluralité d'informations événementielles stockées dans le module de stockage (256).

8. Appareil de l'une quelconque des revendications 1-7, où les informations événementielles sont fournies dans un message événementiel généré par le générateur d'événements (290) et transmises, et le message événementiel comprend une adresse de protocole Internet (IP) de multi-diffusion et des informations sur le port pour la transmission des informations en multi-diffusion et des informations d'identification sur le message événementiel.

9. Appareil de la revendication 1, 2 ou 3, où les informations événementielles comprennent des informations sur une mise à jour fournie par le générateur d'événements (290).

10. Appareil de la revendication 1, 2, 3 ou 9, où les informations événementielles comprennent les informations sur l'emplacement du générateur d'événements.

11. Appareil de la revendication 1, 2, 3, 9 ou 10, où des informations sur l'emplacement comprennent des informations sur le localisateur de ressources uniformes (URL).

12. Appareil destiné à la gestion des informations événementielles de la revendication 1, 2, 3, 9, 10 ou 11, où le module de gestion des événements (260) est agencé pour transmettre les informations du journal des événements comprenant une pluralité d'informations événementielles stockées dans le module de stockage (256) au dispositif de demande de gestion d'événements (210).

13. Procédé de gestion d'informations évènementielles, le procédé 15 comprenant :
une demande, par un dispositif de demande de gestion d'événements (210), de stockage d'informations événementielles au démarrage du dispositif de demande de gestion d'événements (210) ;
la réception au niveau d'un module de gestion d'évènements (260) d'informations évènementielles sur 20 un évènement généré dans un générateur d'évènements (290) en multi-diffusion, où le module de gestion d'évènements (260) et le générateur d'évènements (290) sont situés sur un même réseau;
le stockage des informations événementielles reçues, et **caractérisée par** la communication ultérieure des informations événementielles reçues au dispositif de demande de gestion des événements (210) en réponse à une demande d'informations événementielles.

14. Procédé de la revendication 13, où le module de gestion des événements (260) est connecté au générateur d'événements (290) par Internet.

15. Procédé de la revendication 14 ou 15, où le dispositif de demande de gestion des événements fournit les informations événementielles à un utilisateur.

16. Procédé de la revendication 13, 14 ou 15, où les informations événementielles comprennent les informations sur une heure à laquelle l'événement a été généré.

17. Procédé de la revendication 13, 14, 15 ou 16, où les informations événementielles comprennent les informations sur le contenu de l'événement généré.

18. Procédé de la revendication 13, 14, 15, 16 ou 17, où les informations événementielles comprennent les informations d'identification sur un générateur générant l'événement.

19. Procédé de la revendication 13, 14, 15, 16, 17 ou 18 comprenant par ailleurs la transmission des informations du journal des événements comprenant les informations événementielles stockées au dispositif de demande de gestion des événements (210).

20. Procédé de la revendication 13, 14, 15, 16, 17, 18 ou 19, où les informations événementielles sont fournies dans un message événementiel généré par le générateur d'événements (290) et transmises, où le message événementiel comprend une adresse de protocole Internet (IP) de multi-diffusion et des informations sur le port pour la transmission des informations en multi-diffusion et des informations d'identification sur le message événementiel.

21. Procédé de la revendication 13 ou 14, où les informations événementielles comprennent des informations de mise à jour fournies par le générateur d'événements.

22. Procédé de la revendication 13, 14 ou 21, où les informations événementielles comprennent des informations sur l'emplacement du générateur d'événements.

23. Procédé de la revendication 13, 14, 21 ou 22, où les informations sur l'emplacement comprennent des informations sur l'URL.

24. Procédé de la revendication 13, 14, 21, 22 ou 23 comprenant par ailleurs la transmission des informations du journal des événements comprenant les informations événementielles stockées au dispositif de demande de gestion des événements (210).

25. Système comprenant :
un générateur d'événements (290) un appareil de gestion d'informations événementielles (250) qui est agencé de manière à recevoir des informations événementielles sur un événement généré par le générateur d'événements (290) ; et
un dispositif de demande de gestion des événements (210) qui est agencé de manière, lors 5 du démarrage, à demander le stockage des informations événementielles dans un module de stockage (256) du système de gestion d'informations événementielles (250) et **caractérisé par** un agencement tel qu'il puisse recevoir par la suite les informations événementielles de l'appareil de gestion d'informations événementielles (250) en réponse à une demande d'informations événementielles, et qu'il puisse fournir les informations événementielles à un utilisateur.

26. Système de la revendication 25, où l'appareil de gestion d'informations événementielles (250) est agencé de manière à stocker les informations événementielles reçues.

27. Système de la revendication 25 ou 26, où l'appareil de gestion des informations événementielles (250) est agencé de manière à transmettre les informations du journal des événements comprenant les informations événementielles stockées au dispositif de demande de gestion des événements (210) conformément à une demande du dispositif de demande de gestion d'événements (210).

28. Système de la revendication 25, 26 ou 27, où le générateur d'événements (290) est connecté à l'appareil de gestion d'informations événementielles (250) par Internet et les informations événementielles comprennent des informations de mise à jour.

29. Système de l'une quelconque des revendications 25-28, où les informations événementielles comprennent les informations sur une heure à laquelle l'événement a été généré.

30. Système de l'une quelconque des revendications 25-29, où les informations événementielles comprennent des informations sur le contenu de l'événement généré.

31. Système de l'une quelconque des revendications 25-30, où les informations événementielles comprennent des informations d'identification du générateur d'événements.
